# FASCICULE DE BREVET EUROPEEN

(11) **EP 3 398 819 B1**
(45) Date de publication et mention de la délivrance du brevet: **29.01.2020**
(21) Numéro de dépôt: 18169065.2
(22) Date de dépôt: 24.04.2018
(51) Int. Cl.: B60R 21/203

(54) **DISPOSITIF DE FIXATION DE MODULE DE SECURITE SUR UN VOLANT DE VEHICULE**
BEFESTIGUNGSVORRICHTUNG EINES SICHERHEITSMODULS AUF DEM LENKRAD EINES FAHRZEUGS
DEVICE FOR ATTACHING A SECURITY MODULE TO A VEHICLE STEERING WHEEL

(30) Priorité: 05.05.2017 FR 1754005
(43) Date de publication de la demande: 07.11.2018
(73) Titulaire: Autoliv Development AB, 447 83 Vårgårda (SE)
(72) Inventeur: EVRAT, Nicolas, 76520 Franqueville-Saint-Pierre (FR); CARPENTIER, Franck, 76440 Saumont-la-Poterie (FR); LANVIN, Cyrille, 60650 Saint-Aubin-en-Bray (FR); GALMICHE, Fabrice, 86380 Vendeuvre-du-Poitou (FR); CASSIN, Sébastien, 86440 Migné-Auxances (FR); MATRAT, Thierry, 86190 Vouillé (FR); LANGLET, Sylvain, 60000 Goincourt (FR)
(74) Mandataire: Poindron, Cyrille

(56) Documents cités:
- WO-A1-2010/078896
- US-A1- 2002 043 786

## Description

### DOMAINE TECHNIQUE

La présente invention concerne de manière générale un dispositif de fixation agencé pour fixer et verrouiller un module de sécurité sur un volant de véhicule monté sur un véhicule automobile.

### ART ANTERIEUR

Il est connu dans l'art antérieur des dispositifs de fixation et/ou verrouillage de module de sécurité sur un volant de véhicule, tel que celui divulgué dans le document US2002043786 et qui comprend un jonc élastique qui prend appui sur une surface de verrouillage du module et une surface de verrouillage opposée du volant pour fixer et verrouiller le module sur le volant (son armature en général). En contrepartie, ce système présente notamment l'inconvénient de ne pas présenter de verrouillage du jonc dans sa position finale, en effet, les surfaces de verrouillage sont planes et le jonc pourrait se dégager des surfaces de verrouillage. Cependant, l'ajout d'un système de maintien en position du jonc dans sa position finale nécessite de faire passer le jonc par un point d'inflexion, ce qui peut engendrer des difficultés de montage du module de sécurité sur le volant pour passer ce point d'inflexion. En effet, le module est constamment repoussé par des moyens élastiques tels que des plots élastomères contre le jonc élastique pour éviter des bruits de vibration, et passer le point d'inflexion impose de comprimer ces moyens élastomères. En fonction des chaînes de cotes ou des températures ambiantes, les efforts de compression peuvent varier dans de grandes proportions.

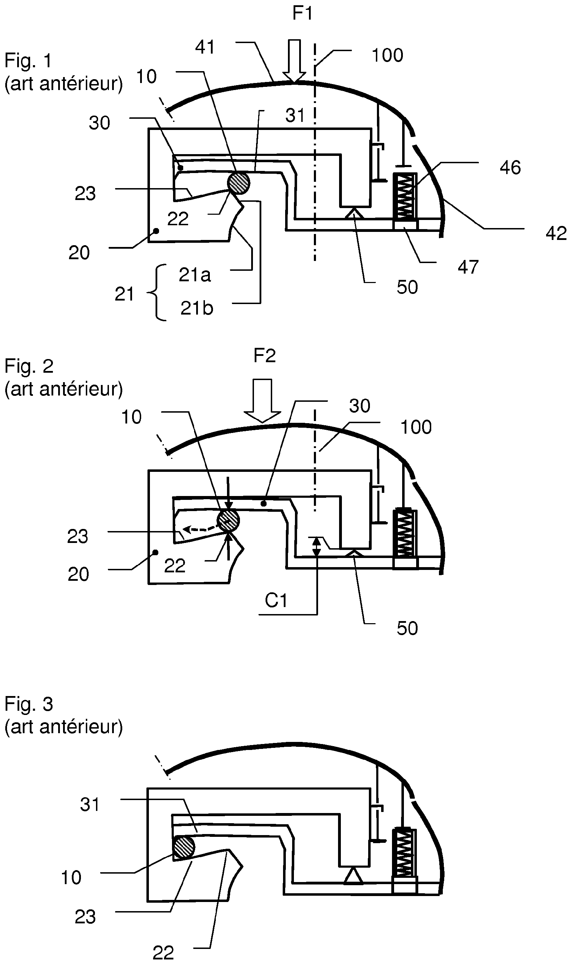

Par ailleurs, les figures 1 à 3 représentent une opération de montage d'un module de sécurité équipé d'un dispositif de fixation sur le volant selon l'art antérieur, avec le passage d'un jonc élastique 10 au dessus d'un point d'inflexion 22, ce qui nécessite de grands efforts de montage à appliquer par un opérateur (force F2 représentée figure 2). Les figures 1 à 3 sont discutées plus en détail en préambule de la section "description détaillée d'un mode de réalisation", après la brève description des dessins.

### RESUME DE L'INVENTION

Un but de la présente invention est de répondre aux inconvénients de l'art antérieur mentionnés ci-dessus et en particulier, tout d'abord, de proposer un dispositif de fixation d'un module de sécurité sur un volant de véhicule avec un verrouillage par un jonc élastique, avec une garantie de maintien du jonc en position finale de verrouillage, tout en apportant une facilité de montage.

Pour cela un premier aspect de l'invention concerne un dispositif de fixation d'un module de sécurité sur une armature de volant, comprenant :
- au moins un jonc élastique, mobile entre une position initiale et une position finale,
- au moins un crochet, avec :
   - une première surface formant une piste de guidage se terminant sur un point d'inflexion, pour faire passer, lors d'un mouvement d'accostage du module sur l'armature, le jonc élastique de la position initiale à une position de détente, et
   - une deuxième surface séparée de la première surface par le point d'inflexion et agencée pour recevoir le jonc élastique passant de la position de détente à la position finale,
- au moins un pontet, avec une troisième surface en regard de la deuxième surface,
   dans lequel le jonc élastique en position finale verrouille le module fixé sur l'armature en prenant appui sur la deuxième surface et sur la troisième surface,
   caractérisé en ce que la troisième surface comprend au moins un renfoncement agencé en regard du point d'inflexion.

Le dispositif comprend un point d'inflexion, c'est-à-dire qu'il forme un point de passage avec un déplacement maximal nécessaire du module pour faire passer le jonc élastique lors du montage.

De plus, le pontet du dispositif ci-dessus comprend un renfoncement, c'est-à-dire un décrochement, une cavité, un retrait par rapport à la troisième surface, et ce renfoncement est agencé en vis-à-vis du point d'inflexion, c'est-à-dire que lors du montage, le jonc élastique, lorsqu'il passe au niveau du point d'inflexion, se situe entre le point d'inflexion et le renfoncement, pour ensuite se détendre vers sa position finale (entre la deuxième surface et le reste de la troisième surface).

En conséquence, le renfoncement permet de passer le point d'inflexion sans devoir comprimer beaucoup plus les dispositifs anti vibrations qui repoussent en continu le module contre le jonc élastique. En tout état de cause, les dispositifs anti vibrations sont moins comprimés, pour le montage du module, lors de la présence du renfoncement que s'il n'y a pas de renfoncement. En d'autres termes, le jonc trouve plus facilement (avec moins d'effort à appliquer), lors du mouvement d'accostage du module, ses conditions de passage vers la position finale entre le pontet et le point d'inflexion. Le montage est plus facile et/ou plus répétable, car les efforts sont plus faibles et/ou varient moins en fonction des dispersions géométriques et/ou des températures de montage.

Autrement dit, lors du montage du module de sécurité, le jonc contacte constamment le crochet en passant de sa position initiale à la position de détente en étant mis sous tension par le crochet. Au passage du point d'inflexion, le jonc contacte toujours le crochet (le point d'inflexion), mais également le renfoncement de la troisième surface, et une fois passé le point d'inflexion, le jonc contacte la deuxième surface, le reste du renfoncement et va enfin se caler en position finale, dans laquelle il contacte simultanément la deuxième surface et la partie de la troisième surface située au-delà du renfoncement. La troisième surface comprend donc une partie enfoncée (contactée par le jonc en cours de montage), et une partie non enfoncée (contactée par le jonc une fois monté, en position finale).

Avantageusement, la deuxième surface est inclinée par rapport à la direction de déplacement du module lors du montage, ce qui forme un obstacle au jonc élastique s'il devait quitter sa position finale (car alors il faudrait comprimer à nouveau les dispositifs anti vibration). On a donc une sécurisation de la position du jonc élastique dans sa position finale. Typiquement, le volant est monté sur une colonne de direction qui présente un axe de rotation, et la direction de montage du module de sécurité est parallèle à l'axe de rotation, et la deuxième surface est orientée d'un angle strictement supérieur à 90° par rapport à l'axe de rotation et/ou la direction de montage. En particulier, la pente de la deuxième surface peut être comprise dans une plage allant de 1 ° à 15°, c'est-à-dire que l'angle entre la deuxième surface et l'axe de rotation du volant ou la direction de montage est compris dans une plage de valeurs allant de 91 ° à 105°.

Avantageusement, le dispositif de fixation comprend au moins un organe élastique agencé entre l'armature et le module de sécurité, pour exercer un effort résiduel dans une direction opposée à une direction d'accostage du module sur l'armature une fois le module fixé sur l'armature.

Avantageusement, l'organe élastique comprend un matériau polymère, de préférence un matériau élastomère, tel qu'un caoutchouc, et/ou de l'éthylène-propylène-diène, et/ou du butadiène, et/ou de l'acrylonitrile, et/ou forme un plot élastomère. De telles matières présentent une sensibilité importante aux températures, et le renfoncement permet de limiter la déformation imposée lors du montage, ce qui limite les variations d'effort en raison des variations de température.

Avantageusement, le crochet est solidaire de l'un du module de sécurité et de l'armature et le pontet est solidaire de l'autre du module de sécurité et de l'armature.

Avantageusement, le crochet est solidaire du module de sécurité et le pontet est solidaire de l'armature.

Avantageusement, la deuxième surface présente au moins une portion adjacente au point d'inflexion qui est inclinée par rapport à une direction d'accostage du module sur l'armature. Cela permet de limiter les risques de déplacement du jonc depuis sa position finale. En d'autres termes, le jonc élastique est naturellement poussé ou guidé vers sa position finale, dès qu'il a passé le point d'inflexion.

En d'autres termes, le jonc élastique, dans sa position finale, n'est pas en regard de la portion de la deuxième surface adjacente au point d'inflexion, mais il est regard d'une portion de la deuxième surface distante du point d'inflexion, et en regard de la troisième surface.

Avantageusement, la portion adjacente de la deuxième surface est inclinée d'un angle compris dans une plage de valeurs allant de 92° à 120°, dans le sens trigonométrique, ce qui garantit le non retour du jonc élastique, car il faudrait comprimer à nouveau l'organe élastique en raison de la pente.

Avantageusement, la première surface du crochet comprend un point d'inflexion secondaire séparant une première portion de la première surface, et une deuxième portion de la première surface, la première portion de la première surface étant agencée pour mettre en tension le jonc élastique lors du mouvement d'accostage depuis sa position initiale, et la deuxième portion de la première surface étant agencée pour permettre une détente du jonc élastique vers la position de détente (au niveau du point d'inflexion). La première portion de la première surface peut par exemple servir à décrocher le jonc élastique d'une position initiale où il est sous contrainte.

Avantageusement, la troisième surface présente une première portion formant le renfoncement, et une deuxième portion agencée en regard du jonc élastique en position finale, et la première portion de la troisième surface est décalée de la deuxième portion de la troisième surface d'une distance comprise dans une plage de valeur allant de 0,1 mm à 3 mm, le long de la direction d'accostage.

Avantageusement, la troisième surface comprend au moins une portion inclinée entre le renfoncement et une portion en regard du jonc élastique en position finale. Cette portion inclinée permet un passage aisé du jonc élastique vers la position finale.

Avantageusement, ladite au moins une portion inclinée est inclinée par rapport à la direction d'accostage d'un angle compris dans une plage de valeur allant de 110° à 150°, dans le sens trigonométrique.

Avantageusement, une distance entre au moins une portion de la troisième surface et au moins une portion de la deuxième surface est constante. En d'autres termes, la deuxième et la troisième surface sont parallèles sur une partie, ce qui facilite le trajet du jonc élastique.

Un second aspect de l'invention concerne un volant de véhicule, comprenant :
- une armature avec au moins le pontet et le jonc élastique du dispositif de fixation selon le premier aspect de l'invention,
- un module de sécurité avec le crochet du dispositif de fixation selon le premier aspect de l'invention.

Un troisième aspect de l'invention concerne un véhicule automobile, comprenant un volant selon le deuxième aspect de l'invention.

### BREVE DESCRITPION DES FIGURES

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un dispositif de fixation d'un module de sécurité sur un volant selon l'art antérieur, au début d'une opération de verrouillage du module sur le volant ;
- la figure 2 représente le dispositif de fixation de la figure 1, en cours de verrouillage;
- la figure 3 représente le dispositif de la figure 1 en fin de verrouillage;
- la figure 4 représente un dispositif de fixation d'un module de sécurité sur un volant selon l'invention, au début d'une opération de verrouillage du module sur le volant ;
- la figure 5 représente le dispositif de fixation de la figure 4, en cours de verrouillage;
- la figure 6 représente le dispositif de la figure 4 en fin de verrouillage.

### DESCRIPTION DETAILLEE D'UN MODE DE REALISATION

Avant de décrire dans le détail un mode de réalisation de l'invention, les figures 1 à 3 seront détaillées, et représentent un mode de réalisation d'un dispositif de fixation d'un module de sécurité sur un volant selon l'art antérieur.

Les figures 1 à 3 représentent un crochet 20 faisant partie d'un module de sécurité de volant de véhicule (typiquement un coussin de sécurité autrement appelé airbag), et dont on voit un capot 41 qui forme une surface externe du volant. Le reste du module de sécurité n'est pas représenté (le sac, le générateur de gaz, les pièces de liaison...) mais les organes du module de sécurité sont solidaires du crochet 20. Le volant de véhicule comprend typiquement une armature en métal, dont on voit un pontet 30, et le module de sécurité est maintenu et verrouillé sur le volant par un jonc élastique 10 qui s'intercale entre l'armature (le pontet 30) et le module (le crochet 20).

La figure 1 représente le début du verrouillage du module de sécurité sur le volant (c'est-à-dire la fin du montage ou accostage du module sur le volant), où le jonc élastique 10 est en contact avec une deuxième portion 21b d'une première surface 21 du crochet 20, et une troisième surface 31 du pontet 30.

Le crochet 20 comprend une première surface 21 avec une première portion 21a et une deuxième portion 21b, qui servent respectivement à comprimer radialement le jonc élastique 10 initialement accroché à l'armature, puis à le guider vers un point d'inflexion 22 du crochet 20, lors d'un mouvement du module de sécurité vers le bas de la figure 1, c'est-à-dire le long d'un axe 100 qui peut être un axe de rotation du volant, ou un axe de colonne de direction (car poussé avec une force F1 par un opérateur).

Le volant comprend un organe élastique sous la forme d'un plot élastique 50 agencé entre l'armature et le module de sécurité, qui exerce sur le module de sécurité un effort continu de poussée vers le haut, de sorte à éviter tout bruit de cliquetis un fois le module verrouillé sur le volant, comme cela sera expliqué à la figure 3. Enfin, le volant comprend également un contacteur d'avertisseur sonore 47, au moins un ressort de rappel 46 pour repousser le capot 41 vers une position de repos (dans laquelle le contacteur d'avertisseur sonore n'est pas activé), et un cache statique 42, solidaire de l'armature.

La figure 2 représente le jonc élastique 10 au niveau du point d'inflexion 22 du crochet 20, car l'opérateur exerce désormais une force F2 vers le bas, supérieure à la force F1, pour comprimer encore plus le plot élastique 50, comme le montre le jeu résiduel C1, ce qui permet au jonc élastique 10, toujours en contact avec la troisième surface 31 du pontet 30, de se détendre radialement par rapport à l'axe 100, et de passer vers une deuxième surface 23 du crochet 20.

Une fois détendu, le jonc élastique 10 occupe une position finale, telle que représentée figure 3 où le jonc élastique 10 prend appui sur la deuxième surface 23 et la troisième surface 31, et verrouille alors le module de sécurité sur l'armature et sur le volant. Comme on le voit sur la figure 3, le plot élastique 50 exerce toujours sur le module de sécurité un effort de poussée vers le haut, ce qui rattrape les jeux et évite tout ballotement du module de sécurité, ainsi que les bruits de cliquetis éventuels.

Le dispositif de fixation du module de sécurité sur le volant comprend donc le crochet 20, le pontet 30 et le jonc élastique 10, et le montage nécessite de comprimer fortement le plot élastique 50. En raison de variations dimensionnelles ou de températures, l'effort F2 de compression à exercer par l'opérateur peut varier fortement.

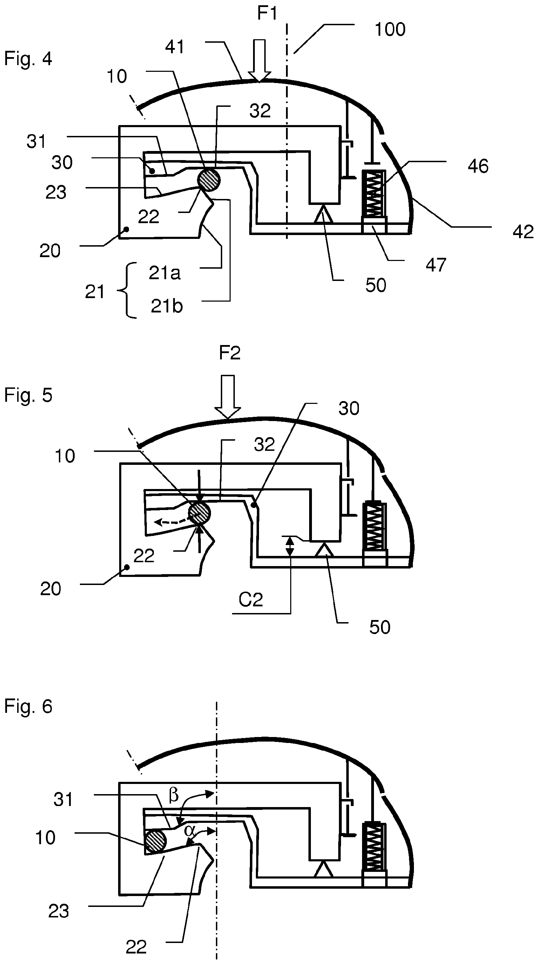

La figure 4 représente un dispositif de fixation selon l'invention, qui permet de faciliter le montage/verrouillage. Ce dispositif de fixation représenté sur les figures 4 à 6 diffère de celui de l'art antérieur (figures 1 à 3) au niveau du pontet 30, le reste des organes étant similaire.

Comme on le voit sur les figures 4 à 6, le pontet 30 présente toujours une troisième surface 31, mais celle-ci comprend un renfoncement 32, agencé en regard du point d'inflexion 22 du crochet 20. Un tel renfoncement 32 peut être un décrochement, une pente, une courbe, mais il résulte en une différence de niveau du pontet 30 entre sa portion au niveau du point d'inflexion 22, et sa portion au niveau de la position finale du jonc élastique 10. En particulier, cette différence de niveau peut aller de 0,1 à 3 mm, et de manière préférée de 0,1 mm à 0,5 mm.

Comme le montre la figure 5, lorsque le jonc élastique 10 passe entre le point d'inflexion 22 et le renfoncement 32, le module de sécurité n'a pas besoin de descendre autant que pour le dispositif de fixation de l'art antérieur, si bien que le plot élastique 50 est moins comprimé, comme le montre la distance C2 de la figure 5, qui est supérieure à la distance C1 de la figure 2. En conséquence, la force F2 à exercer par l'opérateur à la figure 5 est inférieure à la force F2 de la figure 2 pour une position relative finale du module de sécurité par rapport à l'armature identique.

Ensuite, le jonc élastique 10 peut se détendre pour aller en position finale comme le montre le figure 6, car une pente est ménagée sur le pontet 30 pour passer du renfoncement à la troisième surface 31, si bien que le module de sécurité est verrouillé sur le volant, de la même manière que pour le dispositif de l'art antérieur représenté figure 3.

Comme le montre la figure 6, la deuxième surface 23 présente, au voisinage du point d'inflexion 22 un angle α (visible figure 6) compris entre 91° et 120°, et plus préférentiellement 92° à 105°, par rapport à la direction d'accostage ou de montage du module de sécurité (l'axe 100), afin de prévenir tout retour du jonc élastique 10 une fois celui-ci en position finale. De plus, le renfoncement 32 est séparé de la troisième surface 31 du pontet 30 par une portion en pente, inclinée d'un angle β (visible figure 6) compris entre 110° et 150° par exemple, pour permettre le passage du jonc élastique 10 du point d'inflexion 22 vers sa position finale de manière aisée.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à un crochet 20 solidaire du module de sécurité et au pontet 30 intégré dans l'armature du volant, mais il peut être envisagé d'agencer le crochet solidaire de l'armature du volant, et de former le pontet sur le module de sécurité.

## Revendications

1. Dispositif de fixation d'un module de sécurité sur une armature de volant, comprenant :
- au moins un jonc élastique (10), mobile entre une position initiale et une position finale,
- au moins un crochet (20), avec :
• une première surface (21) formant une piste de guidage se terminant sur un point d'inflexion (22), pour faire passer, lors d'un mouvement d'accostage du module sur l'armature, le jonc élastique (10) de la position initiale à une position de détente, et
• une deuxième surface (23) séparée de la première surface (21) par le point d'inflexion (22) et agencée pour recevoir le jonc élastique (10) passant de la position de détente à la position finale,
- au moins un pontet (30), avec une troisième surface (31) en regard de la deuxième surface (23),
dans lequel le jonc élastique (10) en position finale verrouille le module fixé sur l'armature en prenant appui sur la deuxième surface (23) et sur la troisième surface (31),
**caractérisé en ce que** la troisième surface (31) comprend au moins un renfoncement (32) agencé en regard du point d'inflexion (22).

2. Dispositif de fixation selon la revendication précédente, comprenant au moins un organe élastique agencé entre l'armature et le module de sécurité, pour exercer un effort résiduel dans une direction opposée à une direction d'accostage du module sur l'armature une fois le module fixé sur l'armature.

3. Dispositif de fixation selon l'une des revendications précédentes, dans lequel le crochet (20) est solidaire du module de sécurité et dans lequel le pontet (30) est solidaire de l'armature.

4. Dispositif de fixation selon l'une des revendications précédentes, dans lequel la deuxième surface (23) présente au moins une portion adjacente au point d'inflexion (22) qui est inclinée par rapport à une direction d'accostage du module sur l'armature.

5. Dispositif de fixation selon la revendication précédente, dans lequel la portion adjacente de la deuxième surface (23) est inclinée d'un angle compris dans une plage de valeurs allant de 92° à 120°, dans le sens trigonométrique

6. Dispositif de fixation selon l'une des revendications précédentes, dans lequel la première surface (21) du crochet (20) comprend un point d'inflexion secondaire séparant une première portion (21a) de la première surface (21), et une deuxième portion (21b) de la première surface (21), la première portion (21a) de la première surface (21) étant agencée pour mettre en tension le jonc élastique (10) lors du mouvement d'accostage depuis sa position initiale, et la deuxième portion (21b) de la première surface (21) étant agencée pour permettre une détente du jonc élastique (10) vers la position de détente.

7. Dispositif de fixation selon l'une des revendications précédentes, dans lequel la troisième surface (31) présente une première portion formant le renfoncement (32), et une deuxième portion agencée en regard du jonc élastique (10) en position finale, dans lequel la première portion de la troisième surface (31) est décalée de la deuxième portion de la troisième surface (31) d'une distance comprise dans une plage de valeur allant de 0,1 mm à 3 mm, le long de la direction d'accostage.

8. Dispositif de fixation selon l'une des revendications précédentes, dans lequel la troisième surface (31) comprend au moins une portion inclinée entre le renfoncement (32) et une portion en regard du jonc élastique (10) en position finale.

9. Dispositif de fixation selon la revendication précédente, dans lequel ladite au moins une portion inclinée est inclinée par rapport à la direction d'accostage d'un angle compris dans une plage de valeur allant de 110° à 150°, dans le sens trigonométrique.

10. Dispositif de fixation selon l'une des revendications précédentes, dans lequel la deuxième surface est inclinée par rapport à la direction de déplacement du module lors du montage.

11. Dispositif de fixation selon l'une des revendications précédentes, dans lequel une distance entre au moins une portion de la troisième surface et au moins une portion de la deuxième surface sont parallèles.

12. Volant de véhicule, comprenant un dispositif de fixation selon l'une des revendications précédentes et comprenant :
- une armature avec au moins le pontet (30) du dispositif de fixation,
- un module de sécurité avec le crochet (20) du dispositif de fixation,
- au moins le jonc élastique (10) du dispositif de fixation.

13. Véhicule automobile, comprenant un volant selon la revendication précédente.

## Patentansprüche

1. Vorrichtung zur Befestigung eines Sicherheitsmoduls an einem Lenkradrahmen, Folgendes umfassend:
- mindestens einen elastischen Ring (10), der zwischen einer Ausgangsposition und einer Endposition bewegbar ist,
- mindestens einen Haken (20), mit:
• einer ersten Oberfläche (21), die eine Führungsschiene bildet, welche an einem Wendepunkt (22) endet, um den elastischen Ring (10) während einer Andockbewegung des Moduls am Rahmen von der Ausgangsposition in eine Ruheposition zu bewegen, und
• einer zweiten Oberfläche (23), die durch den Wendepunkt (22) von der ersten Oberfläche (21) getrennt und angeordnet ist, um den elastischen Ring (10) aufzunehmen, der von der Ruheposition in die Endposition übergeht,
- mindestens einen Auslöseschutz (30), mit einer dritten Oberfläche (31), die der zweiten Oberfläche (23) zugewandt ist,
wobei der elastische Ring (10) in der Endposition das am Rahmen befestigten Modul durch Auflagerung auf der zweiten Oberfläche (23) und auf der dritten Oberfläche (31) sperrt,
**dadurch gekennzeichnet, dass** die dritte Oberfläche (31) mindestens eine Verstärkung (32) aufweist, die gegenüber dem Wendepunkt (22) angeordnet ist.

2. Befestigungsvorrichtung nach dem vorhergehenden Anspruch, mit mindestens einem zwischen der Bewehrung und dem Sicherheitsmodul angeordneten elastischen Element zum Ausüben einer Restkraft in einer Richtung entgegen einer Andockrichtung des Moduls am Rahmen, sobald das Modul am Rahmen befestigt ist.

3. Befestigungsvorrichtung nach einem der vorhergehenden Ansprüche, bei der der Haken (20) am Sicherheitsmodul befestigt ist und bei welcher der Auslöseschutz (30) am Rahmen befestigt ist.

4. Befestigungsvorrichtung nach einem der vorhergehenden Ansprüche, wobei die zweite Oberfläche (23) mindestens einen an den Wendepunkt (22) angrenzenden Abschnitt aufweist, der in Bezug auf eine Andockrichtung des Moduls an die Verstärkung geneigt ist.

5. Befestigungsvorrichtung nach dem vorhergehenden Anspruch, wobei der angrenzende Abschnitt der zweiten Oberfläche (23) um einen Winkel innerhalb eines Wertebereichs von 92° bis 120° in trigonometrischer Richtung geneigt ist.

6. Befestigungsvorrichtung nach einem der vorhergehenden Ansprüche, wobei die erste Oberfläche (21) des Hakens (20) einen zweiten Wendepunkt umfasst, der einen ersten Abschnitt (21a) von der ersten Oberfläche (21) und einen zweiten Abschnitt (21b) von der ersten Oberfläche (21) trennt, wobei der erste Abschnitt (21a) der ersten Oberfläche (21) angeordnet ist, um den elastischen Ring (10) während der Andockbewegung aus seiner Ausgangsposition zu spannen, und wobei der zweite Abschnitt (21b) der ersten Oberfläche (21) angeordnet ist, um eine Entspannung des elastischen Rings (10) in Richtung der Ruheposition zu ermöglichen.

7. Befestigungsvorrichtung nach einem der vorhergehenden Ansprüche, wobei die dritte Oberfläche (31) einen ersten Abschnitt aufweist, der die Verstärkung (32) bildet, sowie einen zweiten Abschnitt, der in der Endposition gegenüber dem elastischen Ring (10) angeordnet ist, wobei der erste Abschnitt der dritten Oberfläche (31) gegenüber dem zweiten Abschnitt der dritten Oberfläche (31) um einen Abstand innerhalb eines Wertebereichs von 0,1 mm bis 3 mm entlang der Andockrichtung versetzt ist.

8. Befestigungsvorrichtung nach einem der vorhergehenden Ansprüche, wobei die dritte Oberfläche (31) mindestens einen geneigten Abschnitt zwischen der Verstärkung (32) und einem dem elastischen Ring (10) in der Endposition zugewandten Abschnitt umfasst.

9. Befestigungsvorrichtung nach dem vorhergehenden Anspruch, wobei der mindestens eine geneigte Abschnitt in Bezug auf die Andockrichtung um einen Winkel innerhalb eines Wertebereichs von 110° bis 150° in trigonometrischer Richtung geneigt ist.

10. Befestigungsvorrichtung nach einem der vorhergehenden Ansprüche, wobei die zweite Oberfläche in Bezug auf die Bewegungsrichtung des Moduls während der Montage geneigt ist.

11. Befestigungsvorrichtung nach einem der vorstehenden Ansprüche, wobei ein Abstand zwischen mindestens einem Abschnitt der dritten Oberfläche und mindestens einem Abschnitt der zweiten Oberfläche parallel ist.

12. Fahrzeuglenkrad, umfassend eine Befestigungsvorrichtung nach einem der vorhergehenden Ansprüche und Folgendes umfassend:
- einen Rahmen mit mindestens dem Auslöseschutz (30) der Befestigungsvorrichtung,
- ein Sicherheitsmodul mit dem Haken (20) der Befestigungsvorrichtung,
- mindestens den elastischen Ring (10) der Befestigungsvorrichtung.

13. Kraftfahrzeug, umfassend ein Lenkrad nach dem vorhergehenden Anspruch.

## Claims

1. Device for attaching a safety module to a steering wheel frame, comprising:
- at least one resilient bead (10) which is movable between an initial position and a final position;
- at least one hook (20), having:
• a first surface (21) which forms a guide track ending at an inflection point (22), for transferring the resilient bead (10) from the initial position to a release position during a docking movement of the module to the frame; and
• a second surface (23) which is separated from the first surface (21) by the inflection point (22) and is arranged so as to receive the resilient bead (10) passing from the release position into the final position;
- at least one bridge portion (30) which has a third surface (31) facing the second surface (23),
the resilient bead (10), when in the final position, locking the module attached to the frame by being supported on the second surface (23) and on the third surface (31), **characterized in that** the third surface (31) comprises at least one recess (32) arranged so as to face the inflection point (22).

2. Attaching device according to the preceding claim, comprising at least one resilient member arranged between the frame and the safety module, for exerting a residual force in an opposite direction to a docking direction of the module to the frame once the module is attached to the frame.

3. Attaching device according to any of the preceding claims, wherein the hook (20) is rigidly connected to the safety module and wherein the bridge portion (30) is rigidly connected to the frame.

4. Attaching device according to any of the preceding claims, wherein the second surface (23) has at least one portion adjacent to the inflection point (22), which portion is inclined relative to a docking direction of the module to the frame.

5. Attaching device according to the preceding claim, wherein the adjacent portion of the second surface (23) is inclined at an angle within a range of from 92° to 120° in the counter-clockwise direction.

6. Attaching device according to any of the preceding claims, wherein the first surface (21) of the hook (20) comprises a secondary inflection point separating a first portion (21a) of the first surface (21) and a second portion (21b) of the first surface (21), the first portion (21a) of the first surface (21) being arranged so as to tension the resilient bead (10) during the docking movement from its initial position, and the second portion (21b) of the first surface (21) being arranged so as to allow the resilient bead (10) to be released toward the release position.

7. Attaching device according to any of the preceding claims, wherein the third surface (31) has a first portion forming the recess (32), and a second portion which is arranged so as to face the resilient bead (10) in the final position, wherein the first portion of the third surface (31) is offset from the second portion of the third surface (31) in the docking direction by a distance within a range of from 0.1 mm to 3 mm.

8. Attaching device according to any of the preceding claims, wherein the third surface (31) comprises at least one inclined portion between the recess (32) and a portion facing the resilient bead (10) in the final position.

9. Attaching device according to the preceding claim, wherein said at least one inclined portion is inclined, relative to the docking direction, by an angle within a range of from 110° to 150°, in the counter-clockwise direction.

10. Attaching device according to any of the preceding claims, wherein the second surface is inclined relative to the movement direction of the module during assembly.

11. Attaching device according to any of the preceding claims, wherein a distance between at least one portion of the third surface and at least one portion of the second surface are parallel.

12. Vehicle steering wheel comprising an attaching device according to any of the preceding claims and comprising:
- a frame having at least the bridge portion (30) of the attaching device;
- a safety module having the hook (20) of the attaching device;
- at least the resilient bead (10) of the attaching device.

13. Motor vehicle comprising a steering wheel according to the preceding claim.
